# EUROPEAN PATENT APPLICATION

(11) **EP 3 525 157 A1**
(43) Date of publication of application: **14.08.2019**
(21) Application number: 18156096.2
(22) Date of filing: 09.02.2018
(51) Int. Cl.: G06Q 30/08, G06Q 50/18, G06Q 20/06, G05D 1/00, G08G 1/00

(54) **METHOD AND SYSTEM FOR COOPERATIVE OPERATION**

(71) Applicant: Volkswagen Aktiengesellschaft, 38440 Wolfsburg (DE)
(72) Inventor: Jornod, Guillaume, 10245 Berlin (DE); Alieiev, Roman, 39576 Stendal (DE)

(57) **Abstract**

A method and system for performing negotiation and providing monetary incentives for cooperative vehicular operations. Two or more vehicles may negotiate for a requested or desired action, such as providing data or maneuvering a vehicle in a specific way. A first vehicle sends an offer for an action to a second vehicle wirelessly including a price for performing the action by the second vehicle. The first vehicle negotiates with the second vehicle for a monetary incentive for performing the action. The first vehicle provides the monetary incentive to the second vehicle if the first vehicle and the second vehicle reach an agreement. The vehicles may execute a smart contract with a blockchain-based cryptocurrency transaction.

## Description

The present invention relates to a cooperative vehicular system. More particularly, the present invention relates to a method and system for performing negotiation and providing monetary incentives for cooperative operations of vehicles.

Decisions made while operating a vehicle are often the result of a multi-objective optimization problem, which accounts for factors such as fuel consumption, travel time, or the like. The importance of one factor over another for each vehicle may vary over time. For example, at a specific time, a vehicle might value more its travel time than its fuel consumption, while later, when its fuel tank is almost empty and there is no gas station in the vicinity, the fuel consumption may be more important than the travel time.

A cooperative vehicular system is a group of two or more vehicles performing together whilst working on selfish yet common goals. The selfish yet common goal is the essence of the distinction with collaborative systems, where vehicles have a single shared goal (e.g. platooning).

Research has been done on interaction between vehicles, autonomous or not, with beginnings of autonomous truck platooning. A recurring question in such systems is the conflict between individual performances and the global performance. Collaborative vehicles are assumed to have the shared goal as prime priority.

To cooperate with other vehicles, for example, in terms of safety and comfort or to participate in a group formation aiming for a lower fuel consumption and higher road efficiency, a single vehicle might suffer from a lower performance than when it drives by itself without cooperation. An example for the former case is the cost of a communications system (e.g. a provider charge for data over managed frequencies) sending sensor data to fill the occlusion of the field of view of another vehicle. It can also be the reduction of its own speed to avoid a full brake for another vehicle, although it has no legal obligation to do so, in order to reduce their global energy consumption. An example for the latter case is the higher consumption of the leading vehicle of a high-density platoon (HDPL). If an HDPL permits to reduce the drag force and thus the global consumption of the platoon, the leading vehicle still suffers from high drag force whilst performing platoon-related maneuver, thus not improving its individual performance when participating in a platoon.

The case of the platoon leader might not be a problem in collaborative cases, where vehicles are operated by the same company or part of the same organization, sharing costs and benefits. When cooperation is addressed, working for the greater good is generally assumed, thus avoiding the defined problem.

US 2014/0316865 discloses a platoon travel system for organizing a platoon of vehicles along a preset travel route. The vehicles are divided into a top group and a tail end group based on projection area information of the vehicles. However, US 2014/0316865 describes only a specific platooning system and algorithms for joining and leaving maneuvers.

US 2016/010416 discloses a method of vehicle chain resource allocation. The method includes establishing a vehicle chain network between vehicles, transmitting energy parameters between vehicles via the vehicle chain network, and generating energy credits based on the energy parameters. US 2016/010416 is specifically limited to platooning systems and discloses algorithms to translate the energy savings in credits.

US 9,355,423 discloses a method for determining a vehicle droning rewards. US 9,355,423 discloses that vehicle driving data and other information may be used to calculate an autonomous droning reward amount. However, this reward system in US 9,355,423 is specifically limited to the leader-follower relationships. US 9,355,423 also discloses the autonomous relationship such as vehicle B drives according to vehicle A driving characteristics.

There is a demand for providing an improved concept for negotiating for rewards or monetary incentive for cooperative maneuvering of vehicles and providing the monetary incentive or rewards for the requested action in a very short period of time while operating the vehicles. The demand is satisfied according to the appended independent claims.

An example relates to a method and system for performing negotiation and providing monetary incentives for cooperative vehicular operations. A first vehicle may send an offer for an action to a second vehicle wirelessly. The offer includes a price for performing the action by the second vehicle. The first vehicle negotiates with the second vehicle for a monetary incentive for performing the action while operating the first vehicle. The first vehicle provides the monetary incentive to the second vehicle and the second vehicle performs the action if the first vehicle and the second vehicle reach an agreement. The first vehicle and the second vehicle may execute a smart contract and the monetary incentive may be provided by a blockchain-based cryptocurrency transaction.

The action requested from the second vehicle may be providing data from the second vehicle to the first vehicle. The data provided by the second vehicle may be raw data from a sensor or processed data by the second vehicle. The action requested from the second vehicle may be maneuvering the second vehicle in a negotiated way. The action may be recommended by a smart road system.

The first vehicle may perform the negotiation with the second vehicle based on a maximum number of steps for negotiation and a minimum increment or decrement amount for each step of negotiation, such that the offer may be incremented or decremented by the minimum increment or decrement each negotiation step if an agreement is not reached. The negotiation between the first vehicle and the second vehicle may be mediated by a central controller.

Some examples of apparatuses and/or methods will be described in the following by way of example only, and with reference to the accompanying figures, in which:
Fig. 1 is a diagram of example vehicles configured to implement cooperative operations of a vehicle;
Fig. 2 is a diagram of an example internal system;
Fig. 3 is a flow diagram of an example negotiation process for cooperative perception;
Fig. 4 is a flow diagram of an example negotiation process for cooperative intersection crossing; and
Fig. 5 is a flow diagram of an example negotiation process for operating a platoon of a plurality of vehicles.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

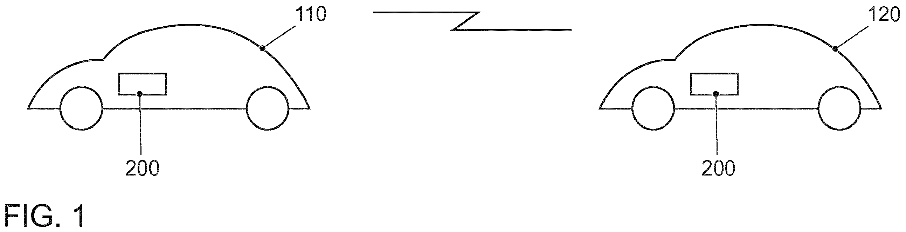

Fig. 1 is a diagram of example vehicles configured to implement cooperative operations of a vehicle. Fig. 1 shows two vehicles 110, 120 interacting each other as an example, but the vehicles 110, 120 may interact with more than one vehicle and may interact with a group of vehicles (e.g. a platoon). The vehicles 110, 120 may be running in the same direction (e.g. vehicles running on a highway) or in different directions (e.g. vehicles approaching an intersection). The vehicle 110, 120 may be a car, a bus, a truck, a sports utility vehicle (SUV), a trailer, a recreational vehicle, a motorcycle, or any other type of motorized vehicles.

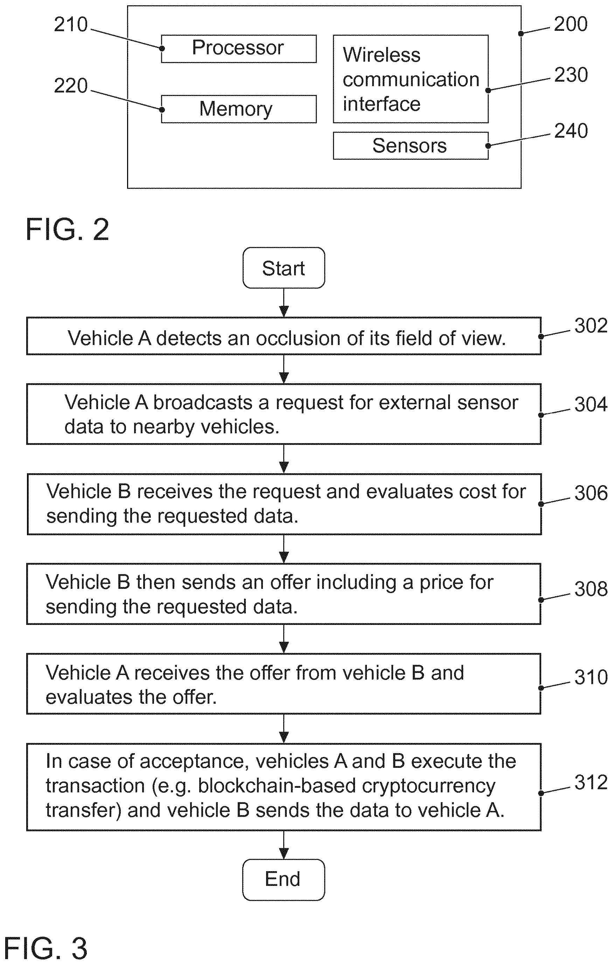

Each vehicle 110, 120 may include an internal system 200. Fig. 2 is a diagram of an example internal system 200. The internal system 200 may include a processor 210, a memory 220, and a wireless communication interface 230, and one or more sensors 240. Each component shown in Fig. 2 may be implemented in hardware, software, or a combination thereof.

The sensor 240 may include, but is not limited to, a proximity sensor(s), a camera(s), or the like. The sensor 240 may detect and record various conditions and scenes in and around the vehicle, one or more operational parameters of the vehicle, or the like. For example, a camera(s) may capture and record inside and/or outside of the vehicle (e.g. a front and/or rear view, a surround view, etc.). For another example, the sensor 240 may detect and store data corresponding to the vehicle's location (e.g., GPS coordinates), speed, direction, acceleration/deceleration, jerk, and heading of the vehicle, locations and images of objects around the vehicle such as other vehicles, road signs, road conditions, animals, pedestrians, or the like, external temperature, rain, snow, or other weather conditions, or the like.

The data captured by the sensor 240 may be stored in the internal system 200 of the vehicle. The data captured by the sensor 240 may be provided to other vehicles via the wireless communication interface 230.

The wireless communication interface 230 includes a wireless transceiver and an antenna. The wireless communication interface 230 is used for communication with other vehicles. The communication may be a point-to-point communication directly between vehicles 110, 120 or may go through a network (e.g. a Third Generation (3G), Fourth Generation (4G), or Fifth Generation (5G) network and beyond). Each vehicle 110, 120 interacts with other vehicle by transmitting and receiving wireless signals. The wireless communication interface 230 may use any wireless communication protocols, such as IEEE 802.11 wireless local area network (WLAN) protocols, Bluetooth, 3G, Long Term Evolution (LTE), satellite communication, GSM, WiMAX, or any other wireless communication protocols.

The internal system 200 includes application software stored in the memory 220 and running on the processor 210 for implementing methods for cooperative maneuvering of a vehicle, which will be explained in detail below, including negotiating and executing a transaction for implementing a certain action with another vehicle, implementing and monitoring the action agreed with another vehicle, providing or receiving a monetary incentive to or from another vehicle (user) as agreed, and the like.

This invention provides a way to incentivize cooperation among vehicles 110, 120, for example in cases where the individual performance conflicts with the global performance. In accordance with the invention, vehicles 110, 120 may negotiate for performing a certain action, such as providing information or maneuvering a vehicle in a specific way (e.g. reducing or increasing speed, providing captured data, leading a platoon, etc.) and provide a monetary incentive for performing the action. The requested action is typically time critical so that the negotiation and performance of the requested action should be performed in a short time period (e.g. immediately). A non-reversible contract may be executed between the users on the fly (e.g. as the vehicles approach an interaction, or the vehicles are running on a highway, etc.).

Individual users (the users of the vehicles) may be compensated for their effort in the performance (e.g. cooperative maneuvers in a group) when their individual performance is affected. The monetary incentive may be provided immediately. The monetary compensation may be fixed for a defined time period and may be re-negotiated for the subsequent time period.

The invention provides a mechanism (common platform) for negotiations for cooperative vehicle maneuvers. This abstraction enables the negotiation with a single objective, such as virtual money, instead of multiple ones. In one example, each vehicle 110, 120 may be responsible for evaluating its effort in terms of the monetary incentive. This means that it may be completely up to each vehicle's preferences to assign a specific universal "cost" or "offer price" value for any required or desired action. If the "cost" value is above the "offer price" value by other participants in the negotiation, the required action might not be executed by the vehicles.

The negotiation and performance of the actions should be performed in a very short period of time since the required actions are typically time critical. For example, if an action requires reducing speed at an intersection, the negotiation between two or more vehicles approaching the intersection and performance of the requested action should be performed immediately. For another example, if a vehicle requests road condition data, the data should be provided immediately otherwise the data might be obsolete. The invention provides a mechanism for rapid completion of the negotiation (convergence or failure).

Example negotiation algorithm between two vehicles is explained below. Table 1 shows example parameters for the negotiation. It should be noted that the parameters in Table 1 are merely an example, and additional parameters may be added or some of the parameters in Table 1 might not be used. The negotiation may also be performed among three or more vehicles.

**Table 1**

| Parameters | Vehicle A | Vehicle B |
|---|---|---|
| Initial offer | *oₐ* | *o_{b}* |
| Maximum negotiation steps | *nsₐ* | *ns_{b}* |
| Offer increment/decrement | *oiₐ* | *oi_{b}* |
| Best alternative to a negotiated agreement | *batnaₐ* | *batna_{b}* |

In order to enable sufficiently fast convergence of negotiation and performance of the requested or desired actions, each participant (i.e. each vehicle) involved in the negotiation may configure its maximum number of possible offers (e.g. maximum negotiation steps) it can participate in and a minimum increment or decrement for counter offer in each negotiation step, as shown in the example negotiation algorithm below. Each vehicle provides an offer and if an agreement is not found, each vehicle may provide a counter offer with an amount increased or decreased by at least the minimum increment or decrement until the maximum number of negotiation steps is reached. If an agreement is not found until the maximum negotiation steps are reached, the negotiation may fail. If the negotiation process reaches the maximum number of steps provided by the vehicle, the vehicle may then decide whether any new offer is needed or may take the best offer as far as the best alternative to a negotiated agreement is not crossed. If the negotiation is mediated through a central controller or any third party, the parameters (e.g. the initial offer, the maximum negotiation steps, the increment/decrement, and/or the BATNA) may be provided to the central controller/third party.

The negotiation between two vehicles may be performed via a central controller/entity (centralized case) or may be performed directly between the vehicles (decentralized case). In the example negotiation algorithm below, vehicle A is offering an action (e.g. sending data or maneuvering a vehicle in a specific way) and vehicle B is offering a reward for the action.

In the centralized case, a central controller/entity (e.g. a smart traffic light controller, a centralized intelligence entity, a smart road system, or the like) receives an offer (e.g. including some or all of the parameters in Table 1) from each vehicle and may mediate the negotiation between the vehicles. The central controller receives the offers from the vehicles and determines whether an agreement can be reached by iterating the negotiation steps based on the received parameters, and sends the result of negotiation to the vehicles. The negotiated price (Pfinal) in the example below may be determined as a mean of the two offers. If an agreement is not found until the maximum number of negotiation steps is reached, the agreement may be made for the middle value of the offers if the offers do not cross the best alternative to the negotiated agreement value. The negotiation may be performed as follows.

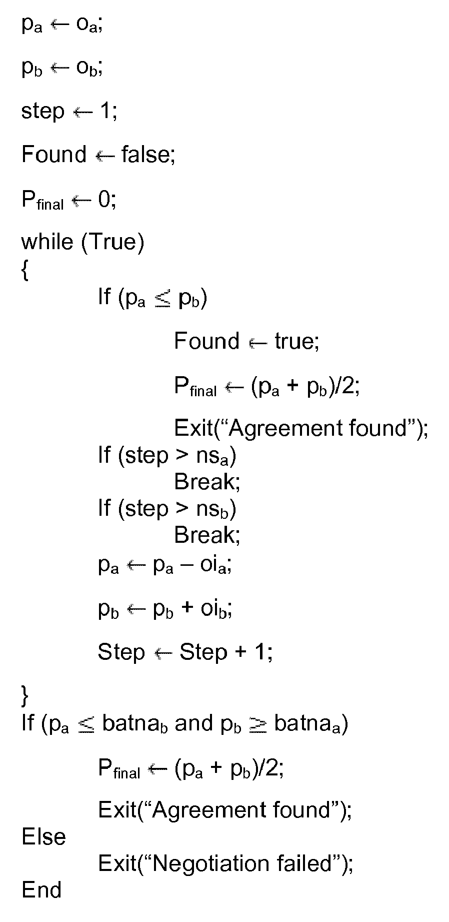

In the decentralized case, the negotiation is performed directly between the vehicles and each vehicle sends an offer and a counter offer to the other vehicle at each step. The vehicles send a counter offer with an increased or decreased amount if an agreement is not found in each negotiation step until the maximum number of negotiation steps is reached. If an agreement is found, a contract may be executed between the vehicles. If an agreement is not found until the maximum number of negotiation steps is reached, the vehicle may accept the last offer if the last offer does not cross the best alternative to the negotiated agreement value. The negotiation may be performed as follows.

In vehicle A:

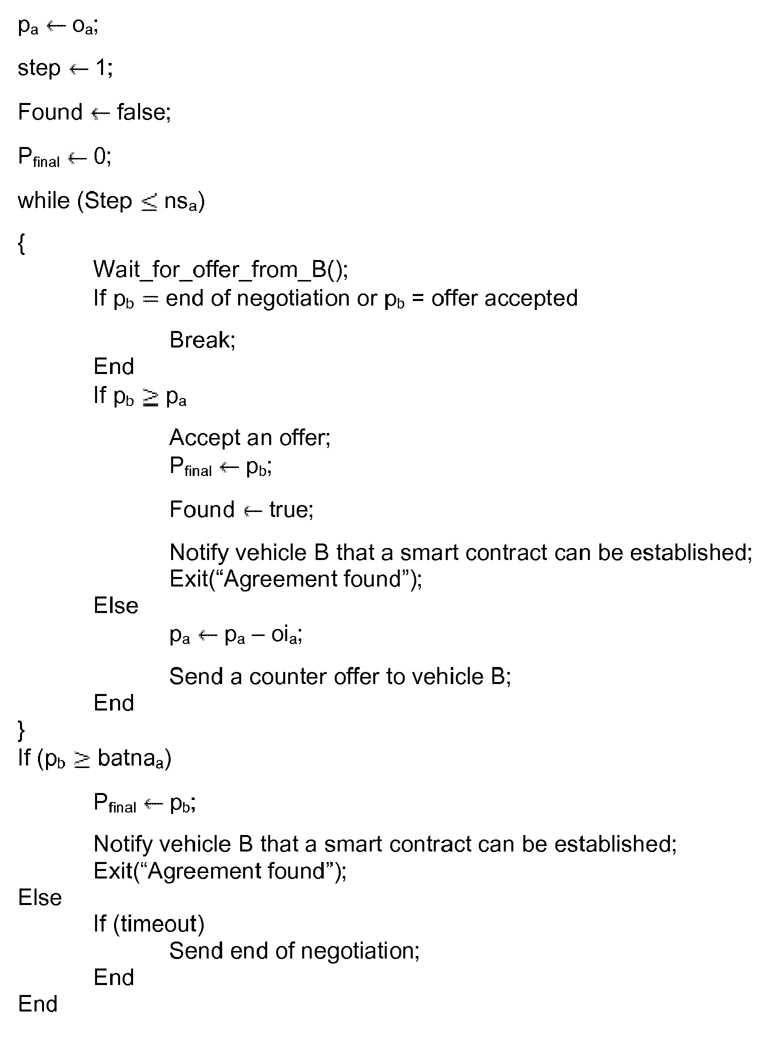

The negotiation fails when both vehicles send an end of negotiation. Once an agreement is reached, the vehicles may execute a transaction. In one example, the vehicles may execute a smart contract using blockchain-based cryptocurrencies or any distributed digital ledger technology. For example, the blockchain-based cryptocurrencies may provide a platform for this negotiation. Blockchain technology is based on a distributed digital ledger, which keeps records of all transactions. Transactions are validated by the distributed nodes (i.e. the internal computing system in each vehicle), which makes the system independent of a central identity and enables two parties operate an immediate transaction with a simple network connection. The fast and distributed characteristics of the blockchain-based cryptocurrency technology may enable such an immediate incentivization systems. A smart contract is "A computerized transaction protocol that executes the terms of a contract". Here the contract is the result of the negotiation, i.e. a promise for a defined reward in exchange for e.g. a defined action or defined set of data. This transaction can be for instance operated on a blockchain-based platform which has the advantage to rely on a public ledger meaning that, among others, both parties can monitor the transaction and decide whether or not they continue their business relationship in an automated and rather immediate way. In addition to the short term monitoring and public fold, a blockchain-based smart contract has the advantage, over the traditional contract, to be enforced by cryptographic protocols.

The parties (i.e. the vehicles) involved in the cooperative maneuvering may execute a smart contract once a negotiation reaches an agreement. A smart contract is a computer protocol intended to digitally facilitate, verify, or enforce the negotiation and performance of a contract. Smart contracts allow the performance of credible transactions without third parties. The transactions are trackable and irreversible. The cryptocurrency transaction (e.g. transferring a cryptocurrency in an agreed amount from one account to another) may be operated when the contract is executed. The internal system 200 of each vehicle 110, 120 autonomously negotiates with other vehicle(s), and executes and monitors performance of the smart contract including the cryptocurrency transaction and performance of the requested action (such as transfer of data).

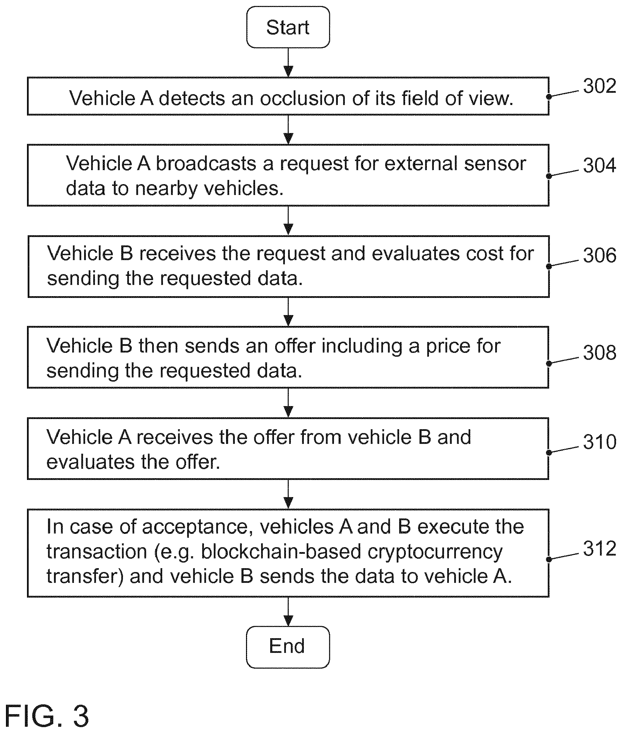

Fig. 3 is a flow diagram of an example negotiation process for cooperative perception (e.g. sharing of sensor data). For example, vehicle A detects an occlusion of its field of view (302). Vehicle A broadcasts (i.e. sends a wireless signal) a request for external sensor data to nearby vehicles (304). Vehicle B receives the request via the wireless transmission and evaluates cost for sending the requested data (306). Vehicle B then sends an offer to vehicle A including a price for sending the requested data (308). Vehicle A receives the offer from vehicle B and evaluates the offer (310). Vehicles A and B may perform negotiation in one or more steps to reach an agreement. In case of acceptance, vehicles A and B execute a transaction (e.g. a blockchain-based cryptocurrency transfer) and vehicle B sends the data to vehicle A (312). The above example is described just for the case of obstruction of the field of view, but the requested data may be any type of data that may be necessary for any situations.

The data provided by the vehicle may be raw data from a sensor (e.g. cloud from laser scanner/lidar, radar, video stream from a camera(s) (three-dimensional (3D) cameras, 360° cameras, etc.), Global Positioning System (GPS), odometer, inertial measurement unit (IMU)) to let the receiving vehicle A perform filtering, fusion and/or analysis of the data. Alternatively, the data provided by the vehicle may be processed data, such as arrays of objects, 3D scene of the surrounding of vehicle B, or the like.

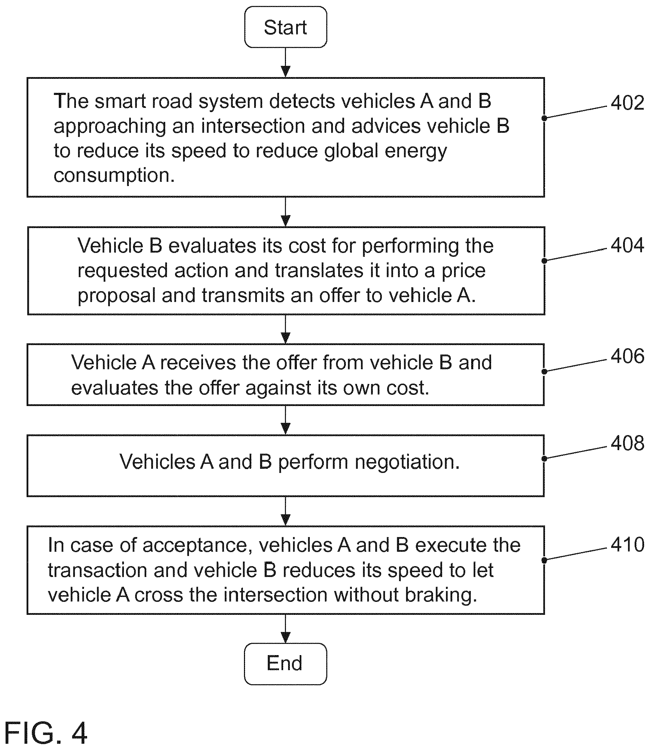

Fig. 4 is a flow diagram of an example negotiation process for cooperative intersection crossing. Vehicles A and B arrive at an intersection where a smart road system is deployed. The smart road system is an intelligent system deployed for relieving traffic congestion and improving road system capacity. The smart road system provides driving advices (no commands) to the nearby vehicles, such as specific rights of way. In this example, it is assumed that according to the traffic laws, vehicle A should yield to vehicle B, but the smart road system advices vehicle B that if vehicle B reduces its speed, vehicle A can cross the intersection without stopping. This maneuver reduces the global energy consumption especially because it avoids a full brake of vehicle A. However, vehicle B does not benefit from this maneuver since it must reduce its speed and therefore use more energy to come back to its original state.

The smart road system detects vehicles A and B approaching an intersection and advices vehicle B to reduce its speed to reduce global energy consumption (302). Vehicle B evaluates its cost for performing the requested action and translates it into a price proposal and transmits an offer to vehicle A (304). Vehicle A receives the offer from vehicle B and evaluates the offer against its own cost (306). Vehicles A and B perform negotiation (308). Each vehicle evaluates the cost of giving the priority and if the total cost does not meet the proposal, the priority may be refused. In case of acceptance (i.e. an agreement is reached by vehicles A and B), vehicles A and B execute the transaction (e.g. blockchain-based cryptocurrency transfer) and vehicle B reduces its speed to let vehicle A cross the intersection without braking (310). If an agreement is not reached by vehicles A and B, a negotiation fails and a priority may not be given to vehicle A.

In the above example, since the global reduction of traffic congestion is also an objective of a road system operator, the road system operator may also participate in the transaction to improve the traffic flow in the road system. For example, a central system (e.g. the smart road system) may accept proposals from vehicles A and B and may mediate the negotiation between the vehicles, and if an agreement cannot be reached, the central system may fill the gap (e.g. pay the difference between the offers). Alternatively, the central system may directly negotiate with a vehicle and pay the reward to the vehicle. In the above example, the smart road system may negotiate with vehicle B and provide a reward to vehicle B if vehicle B agrees to reduce its speed to let vehicle A to pass without stopping. Alternatively, the central system may negotiate with one or more vehicles to obtain data (e.g. for traffic signal management, or the like) and pay a compensation to the vehicle(s) that provide the data.

In both examples above, the transaction may be monitored by using the connectivity of the vehicles. The system may enforce the payments by monitoring the transactions using a blockchain's feature. The blockchain-based cryptocurrency transactions are immediate and public. Therefore, the parties may check the payment immediately and if the payment is not made as agreed, the vehicle may cancel the transaction, (e.g. vehicle B may change its trajectory and drive according to the traffic law).

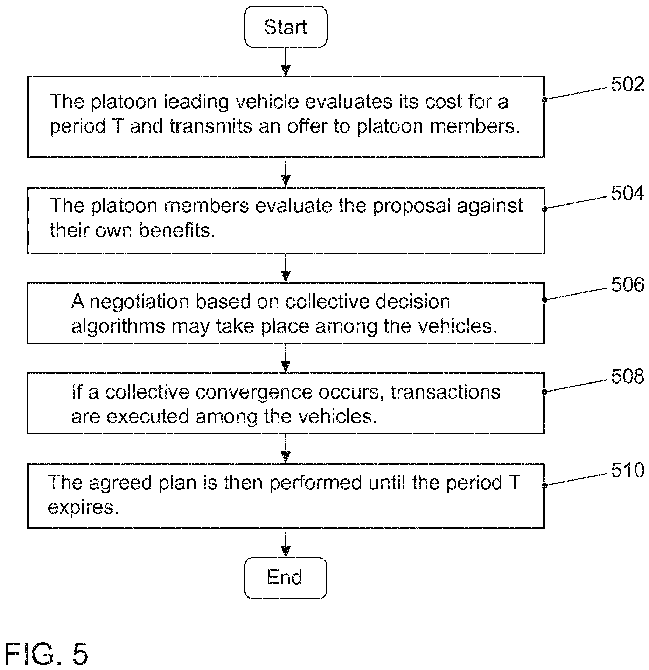

Fig. 5 is a flow diagram of an example negotiation process for operating a platoon of a plurality of vehicles. Grouping vehicles into platoons is one possible way of increasing the capacity of roads. An automated highway system may be implemented with this technology. Platoons may decrease the distances between vehicles using electronic or mechanical coupling. This capability would allow many vehicles to accelerate or brake simultaneously. Smart cars could automatically join and leave a platoon.

It is assumed that a platoon is already formed. The platoon leading vehicle evaluates its cost (energy, delay penalty, etc.) for a period T and transmits an offer to platoon members (502). The platoon members evaluate the proposal against their own benefits (504). A negotiation based on collective decision algorithms (i.e. marker-based algorithm) may take place among the vehicles (506). Collective decision algorithms are a family of algorithm involving multiple agents having different interests, resources and objectives, which are sometimes remote in the case of distributed collective decision algorithms. The agents must reach an agreement based on defined rules (rule-based algorithms), on bidding processes (market-based algorithms) for instance. Here the collective algorithms for more than two agents can start with the evaluation of the cost and benefit of participating in a collective behavior (such has estimating the drag force cost for the first member of a platoon, the cost of time for driving under the maximal speed, the benefit of reduced a drag force for followers in a platoon, decreased fuel consumption, etc. Then the agents can get involved in a bidding mechanism where they would try to reach a consensus for engaging the collective behavior, such has negotiating prices, time of involvement, etc. They can also, for instance, apply predefined optimization rules. If a collective convergence occurs, transactions are executed among the vehicles (e.g. cryptocurrency-based transactions) (508). The agreed plan is then performed until the period T expires (510). The negotiation process may then restart for the subsequent period.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or-steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

### List of reference signs:

110, 120: vehicle,
200: internal system,
210: processor,
220: memory,
230: wireless communication system,
240: sensors.

## Claims

1. A method for cooperative operation of a vehicle, the method comprising:
a first vehicle (110) sending an offer for an action to a second vehicle (120) wirelessly, wherein the offer includes a price for performing the action by the second vehicle (120);
the first vehicle (110) negotiating with the second vehicle (120) for a monetary incentive for performing the action while operating the first vehicle (110); and
the first vehicle (110) providing the monetary incentive to the second vehicle (120) if the first vehicle (110) and the second vehicle (120) reach an agreement.

2. The method of claim 1, wherein the first vehicle (110) executes a smart contract with the second vehicle (120).

3. The method as in any one of claims 1-2, wherein the monetary incentive is provided by a blockchain-based cryptocurrency transaction.

4. The method as in any one of claims 1-3, wherein the action requested from the second vehicle (120) is either providing data from the second vehicle (120) to the first vehicle (110) or maneuvering the second vehicle (120) in a negotiated way.

5. The method of claim 4, wherein the action is recommended by a smart road system.

6. The method as in any one of claims 1-5, wherein the first vehicle (110) performs the negotiation with the second vehicle (120) based on a maximum number of steps for negotiation and a minimum increment or decrement amount for each step of negotiation, wherein the offer is incremented or decremented by the minimum increment or decrement each negotiation step if an agreement is not reached.

7. The method as in any one of claim 1-6, wherein the negotiation between the first vehicle (110) and the second vehicle (120) is mediated by a central controller.

8. A method for cooperative operation of a vehicle, the method comprising:
a first vehicle (110) receiving an offer for an action from a second vehicle (120) wirelessly, wherein the offer includes a price for performing the action by the first vehicle (110);
the first vehicle (110) negotiating with the second vehicle (120) for a monetary incentive for performing the action while operating the first vehicle (110); and
the first vehicle (110) performing the action in response to payment of the monetary incentive from the second vehicle (120) if the first vehicle (110) and the second vehicle (120) reach an agreement.

9. The method of claim 8, wherein the monetary incentive is provided by a blockchain-based cryptocurrency transaction.

10. The method as in any one of claims 8-9, wherein the action requested to be performed by the first vehicle (110) is either providing data to the second vehicle or maneuvering the first vehicle (110) in a negotiated way.

11. The method as in any one of claims 8-10, wherein the first vehicle (110) performs the negotiation with the second vehicle (120) based on a maximum number of steps for negotiation and a minimum increment or decrement amount for each step of negotiation, wherein the offer is incremented or decremented by the minimum increment or decrement each negotiation step if an agreement is not reached.

12. A system for cooperative operation of a first vehicle, the system comprising:
a transceiver (230) configured to send an offer for an action to a second vehicle (120) wirelessly, wherein the offer includes a price for performing the action by the second vehicle (120); and
a processor (210) configured to negotiate with the second vehicle (120) for a monetary incentive for performing the action while operating the first vehicle (110), and provide the monetary incentive to the second vehicle (120) if the first vehicle (110) reaches an agreement with the second vehicle (120).

13. The system of claim 12, wherein the processor (210) is configured to negotiate with the second vehicle (120) based on a maximum number of steps for negotiation and a minimum increment or decrement amount for each step of negotiation, wherein the offer is incremented or decremented by the minimum increment or decrement each negotiation step if an agreement is not reached.

14. A system for cooperative operation of a first vehicle, the system comprising:
a transceiver (230) configured to receive an offer for an action from a second vehicle (120) wirelessly, wherein the offer includes a price for performing the action by the first vehicle (110); and
a processor (210) configured to negotiate with the second vehicle (120) for a monetary incentive for performing the action while operating the first vehicle (110), and perform the action in response to payment of the monetary incentive from the second vehicle (120) if the first vehicle (110) reaches an agreement with the second vehicle (120).

15. The system of claim 14, wherein the processor (210) is configured to negotiate with the second vehicle (120) based on a maximum number of steps for negotiation and a minimum increment or decrement amount for each step of negotiation, wherein the offer is incremented or decremented by the minimum increment or decrement each negotiation step if an agreement is not reached.

## Amended claims

### Amended claims in accordance with Rule 137(2) EPC.

1. A method for cooperative operation of a vehicle, the method comprising:
a first internal system including a first processor (210) and software running on the first processor (210) in a first vehicle (110) sending via a first wireless communication interface (230) an offer for an action to a second internal system including a second processor (210) and software running on the second processor (210) in a second vehicle (120) wirelessly, wherein the offer includes a price for performing the action by the second vehicle (120);
the first internal system in the first vehicle (110) autonomously negotiating with the second internal system in the second vehicle (120) for a monetary incentive for performing the action while operating the first vehicle (110); and
the first internal system in the first vehicle (110) providing the monetary incentive to the second internal system in the second vehicle (120) if the first internal system in the first vehicle (110) and the second internal system in the second vehicle (120) reach an agreement.

2. The method of claim 1, wherein the first internal system in the first vehicle (110) executes a smart contract with the second internal system in the second vehicle (120).

3. The method as in any one of claims 1-2, wherein the monetary incentive is provided by a blockchain-based cryptocurrency transaction.

4. The method as in any one of claims 1-3, wherein the action requested from the second vehicle (120) is either providing data from the second vehicle (120) to the first vehicle (110) or maneuvering the second vehicle (120) in a negotiated way.

5. The method of claim 4, wherein the action is recommended by a smart road system.

6. The method as in any one of claims 1-5, wherein the first internal system in the first vehicle (110) performs the negotiation with the first internal system in the second vehicle (120) based on a maximum number of steps for negotiation and a minimum increment or decrement amount for each step of negotiation, wherein the offer is incremented or decremented by the minimum increment or decrement each negotiation step if an agreement is not reached.

7. The method as in any one of claim 1-6, wherein the negotiation between the first vehicle (110) and the second vehicle (120) is mediated by a central controller.

8. A method for cooperative operation of a vehicle, the method comprising:
a first internal system including a first processor (210) and software running on the first processor (210) in a first vehicle (110) receiving an offer for an action from a second internal system including a second processor (210) and software running on the second processor (210) in a second vehicle (120) wirelessly via a first wireless communication interface (230), wherein the offer includes a price for performing the action by the first vehicle (110);
the first internal system in the first vehicle (110) autonomously negotiating with the second internal system in the second vehicle (120) for a monetary incentive for performing the action while operating the first vehicle (110); and
the first vehicle (110) performing the action in response to payment of the monetary incentive from the second vehicle (120) if the first internal system in the first vehicle (110) and the second internal system in the second vehicle (120) reach an agreement.

9. The method of claim 8, wherein the monetary incentive is provided by a blockchain-based cryptocurrency transaction.

10. The method as in any one of claims 8-9, wherein the action requested to be performed by the first vehicle (110) is either providing data to the second vehicle or maneuvering the first vehicle (110) in a negotiated way.

11. The method as in any one of claims 8-10, wherein the first internal system in the first vehicle (110) performs the negotiation with the second internal system in the second vehicle (120) based on a maximum number of steps for negotiation and a minimum increment or decrement amount for each step of negotiation, wherein the offer is incremented or decremented by the minimum increment or decrement each negotiation step if an agreement is not reached.

12. A system for cooperative operation of a first vehicle, the system in the first vehicle comprising:
a transceiver (230) configured to send an offer for an action to an internal system in a second vehicle (120) wirelessly, wherein the offer includes a price for performing the action by the second vehicle (120); and
a processor (210) configured to autonomously negotiate with the internal system in the second vehicle (120) for a monetary incentive for performing the action while operating the first vehicle (110), and provide the monetary incentive to the second vehicle (120) if the first vehicle (110) reaches an agreement with the second vehicle (120).

13. The system of claim 12, wherein the processor (210) is configured to negotiate with the internal system in the second vehicle (120) based on a maximum number of steps for negotiation and a minimum increment or decrement amount for each step of negotiation, wherein the offer is incremented or decremented by the minimum increment or decrement each negotiation step if an agreement is not reached.

14. A system for cooperative operation of a first vehicle, the system comprising:
a transceiver (230) configured to receive an offer for an action from an internal system in a second vehicle (120) wirelessly, wherein the offer includes a price for performing the action by the first vehicle (110); and
a processor (210) configured to autonomously negotiate with the internal system in the second vehicle (120) for a monetary incentive for performing the action while operating the first vehicle (110), and perform the action in response to payment of the monetary incentive from the second vehicle (120) if the first vehicle (110) reaches an agreement with the second vehicle (120).

15. The system of claim 14, wherein the processor (210) is configured to negotiate with the internal system in the second vehicle (120) based on a maximum number of steps for negotiation and a minimum increment or decrement amount for each step of negotiation, wherein the offer is incremented or decremented by the minimum increment or decrement each negotiation step if an agreement is not reached.
